# EUROPEAN PATENT APPLICATION

(11) **EP 3 163 385 A1**
(43) Date of publication of application: **03.05.2017**
(21) Application number: 15003129.2
(22) Date of filing: 02.11.2015
(51) Int. Cl.: G05B 15/02

(54) **BUILDING AUTOMATION FOR A BUILDING WITH TECHNICAL DEVICES, USING A DATA STRUCTURE WITH DEVICE-TO-ZONE ASSIGNMENT OBTAINED FROM MOBILE COMPUTERS WITHIN THE BUILDING**

(71) Applicant: ABB AG, 68309 Mannheim (DE)
(72) Inventor: Durdik, Zoya, 69469 Weinheim (DE); Gamer, Thomas, 68782 Brühl (DE); Schlich, Bastian, 68219 Mannheim (DE)

(57) **Abstract**

A data structure (500) is suitable for use by a building automation system (600) for a building (200) having a room (215) with a room device (251). The data structure (500) is provided by a mobile computer (800). In the computer (800), an optical sensor (810) is directed to a plurality of directions (①,②) inside the room (215) to obtain a plurality of images (410-①, 410-②), with a particular image corresponding to a particular direction. The computer (800) processes the images (410-①, 410-②) to identify edges of the room (215) and to store edge coordinates in the data structure (500). The computer (800) processes the images (410-①, 410-②) to identify device coordinates of the room device (251), stores the device coordinates in the data structure (500), and sends the data structure (500) to the building automation system (600).

## Description

### Technical Field

The present invention generally relates to industrial engineering used for building automation, and more particularly, to a building automation system (BAS) and to a method that uses mobile computers and image processing to obtain data that is used during planning, engineering, commissioning, and operation of the building.

### Background

Building automation relates to all kinds of buildings, such as residential buildings (e.g. apartment houses), commercial buildings (e.g., shops, department stores, office buildings, and hospitals), state-run buildings (e.g., barracks, penitentiaries), industrial buildings (e.g., plants, factories, warehouses) and so on. Building automation systems (BAS) control the technical equipment that is located inside the buildings. The BAS can also control technical equipment that is located outside, but associated with the buildings. Technical equipment includes technical devices for heating, cooling, air-conditioning, lighting, fire monitoring, access controlling, generating electricity (among them solar panels) and includes other technical appliances. Technical devices are usually powered by electricity, but this is not necessary. Furniture, installation ducts, cable trays or other equipment also belong to the technical devices. Some of the technical devices are present in the building only temporarily, such as portable heaters. Some of the devices are visible only during construction of the building, such as cable channels that are being covered by wall plaster.

The BAS can be a system that is distributed over sub-systems. Taking lighting as an example, lighting devices not only include light actuators, light switches and lamps but also devices that determine the need for light, such as light sensors, light meters, person presence sensors and so on. The BAS could have an overall function that estimates particular lighting requirements, for example, based on a measurement of sun-light, and could have sub-systems that activate or deactivate a device (e.g., switch it on or off) depending on the presence or absence of persons in particular rooms.

However, building automation relies on data that qualifies as input data to the BAS. Such input data represents, for example, the structure of the building and the current or future configuration of the building with technical devices. The input data is related to documentation. The relation can be regarded as a bi-directional exchange: input data can be obtained from documentation, and some data is stored as documentation to become input data at a later point in time. As documentation is usually available in the form of drawings and texts, the exchange between data and documentation can face challenges or obstacles, such as media breaks, data incompleteness or data incompatibility.

The persons responsible for technical devices within the building are the so-called electrical integrators (or system integrators) and the facility managers. The integrators prepare the building to be operated, and the facility managers actually operate the buildings on a day-to-day basis. The integrators play an active role in planning, engineering, and commissioning. The integrators provide and use data (or documentation). During their work, the integrators frequently switch workplaces between offices and the building (to be automated). However, data (or documentation) is sometimes not yet available when the integrators need it; and data (or documentation) is sometimes not available when the integrators visit the buildings. In such situations, the integrator may be forced to acquire data again, for example, by measuring rooms or by inspecting devices. This is often accompanied by manually updating data records. Such data requirements apply to the facility managers as well.

In general, the equipment needs to be properly prepared, connected, installed and configured. However, the mentioned circumstances and other reasons can lead to incorrect data (or documentation) that prevents the BAS to operate correctly. In such situations, the BAS would not control the technical equipment properly.

### Summary

According to embodiments of the present invention, input data for the building automation system (BAS) is provided as a data structure to the BAS. The data structure is provided by a mobile computer that is located on-site, that means inside the rooms. The mobile computer has an optical sensor - such as a camera - that is directed to a plurality of directions inside the room. Images are obtained for the directions. The images are processed to identify edges of the room and to store coordinates of the edges to the data structure, and to identify devices with coordinates as well.

To improve the accuracy of the coordinates and to provide further data, a further sensor at the mobile devices provide further information that is processed into the data structure. Such further information can comprise location and movement data of the mobile computer (from a gyroscope or a global positioning system sensor), data obtained by processing images of the devices, data obtained by communicating with the devices via non-optical channels, such as radio links. In other words, several sensors can interplay, with the camera being only one of them, with other sensors such as the gyroscope and the position sensor.

A system is implemented as a mobile computer and adapted to provide the data structure suitable for sending to the BAS. The system comprises an optical sensor that can be directed to a plurality of directions inside the room. The optical sensor obtains a plurality of images, with a particular image corresponding to a particular direction. A processor is adapted to process the plurality of images to identify edges of the room, to store edge coordinates in the data structure, to identify device coordinates of at least one room device, and to store the device coordinates in the data structure. The processor uses techniques such as hue saturation detection, detection that the image structure matches templates, and the evaluation of histograms of the images. An attached sensor can be a distance sensor to measure at least one distance of the mobile computer to a wall, a radio signal receiver to receive a signal from the room device, a position sensor to identify the position of the mobile computer inside the room, or a direction sensor to determine the direction of the mobile computer inside the room.

In other words, and from a different perspective, the BAS controls at least one room device in a room of a building, in correspondence to the data of the data structure that the building automation system receives from a system.

### Brief Description of the Drawings

FIG. 1 illustrates a building and a building automation system that controls devices within the building by using a data structure obtained by a mobile computer;
FIG. 2 illustrates a processor of the mobile computer as an arrangement of processing blocks that receive raw data as input and provide device data as output;
FIG. 3 illustrates coordinates and naming conventions in a perspective view of a room in the building;
FIG. 4 illustrates a view-from-above of the room with the mobile computer as well as with images taken by an optical sensor of the mobile computer;
FIG. 5 illustrates a side-view of a user who stands on the floor of the room and who holds the mobile computer in the hands;
FIG. 6 illustrates a side-view of a tripod that stands on the floor of the room and that holds the mobile computer;
FIG. 7 illustrates a simplified overview to the device and to sensors in three scenarios, with input data and output data by way of example;
FIG. 8 illustrates the mobile computer in combination with a further computer that is connected via a network; and
FIG. 9 is a method flow chart of method for providing the data structure;
FIGS. 10A and 10B illustrate diagrams of rooms, devices, and mobile computers in combination with floor plans and data structures, by way of example; and
FIG. 11 illustrates a diagram that shows an example of a generic computer device 900 and a generic mobile computer device 950, which may be used with the techniques described here.

### Detailed Description

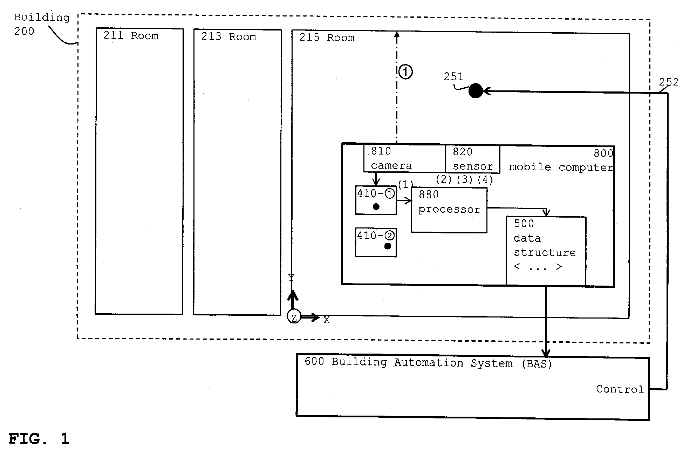

FIG. 1 illustrates building 200 and building automation system 600 (BAS 600) that controls devices within building 200 by using data structure 500 obtained by mobile computer 800.

Building 200 has a plurality of rooms 211, 213 and 215. Technical device 251 (symbolized here by a black dot) is located inside room 215. Automation system 600 controls device 251 through communication link 252 such as a computer network (with a bus system) or otherwise. Usually there are other devices in room 215 or in the other rooms, and so that building 200 has a plurality of devices to be controlled by the system.

In order to control device 251 (and the other devices), BAS 600 requires data regarding the devices, so-called device data. The device data is obtained from mobile computer 800 that executes a method; and the device data is stored in data structure 500 that is made available to building automation system 600. Some of data structure 500 can be forwarded to device 251 itself, for example, for situations in that BAS 600 configures devices 251.

Data structure 500 is not limited to device data, but can also include room data. Also, data structure 500 can be converted to a plan as a visual representation of the building and the devices. Plans are available at different granularities, such as building plans, floor plans, or room plans.

There are at least two requirements for the device data: First, the device data should be accurate, in the sense that numeric values represent the reality of the building (quantity). Second, the device data should be adequate in the sense that BAS 600 can use the device data for controlling the building (quality). BAS 600 needs data that is related to the situation in that the device is used. For example, for controlling a ceiling lamp, the BAS 600 needs data regarding the ambient light, the presence (or absence) of a person or the like. In the building, the sensor for the ambient light and the sensor for the person (e.g., movement sensor) need to be located in certain distance from the lamp. The presence sensor would detect a person moving to an area below the lamp so that the BAS 600 can switch the lamp on.

Mobile computer 800 is also located inside room 215. Mobile computer 800 comprises sensors 810 and 820 to capture data and processor 880 to process data.

Sensor 810 provides raw data as images 410 (1). Usually, image data is visual data, but there is no need for mobile computer 800 to actually visualize the images to a user.

Sensor 820 provides raw data (2)(3)(4) as non-images, as measurement values (2), user data (3), and device messages (4). Processor 880 processes the raw data into the device data and thereby provides data structure 500. From a different perspective, raw data (1)-(4) is the input for processor 880, and data structure 500 is the output.

The description refers to mobile computer 800 that has sensors 810 and 820 statically mounted so that the sensors move together with the computer.

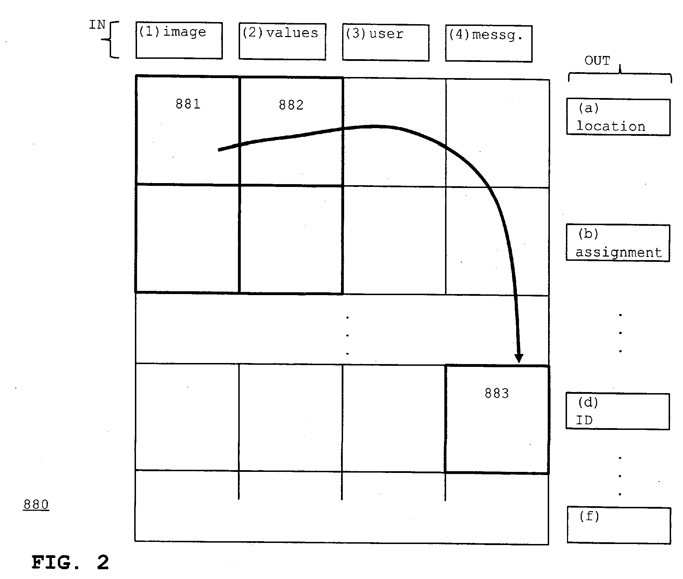

FIG. 2 illustrates processor 880 of mobile computer 800 as an arrangement of processing blocks 881, 882, 883 etc. that receive raw data as input (columns) and provide device data as output (rows). Raw data at the input is classified as (1)(2)(3) and (4). Device data at the output is classified into (a), (b) ... (f). The processing blocks can be identified as input/output combination. For example,
the block at (1)(a) receives images and provide (a) location data;
the block at (2)(a) receives measurement data (2) and location data (a) (arrow to the right from (1)(a)) and improves the accuracy of the location data;
the block at (4)(d) receives a device message that identifies the device and receives the location data from block (2)(a) and provides device data that represents a particular device at a particular location.

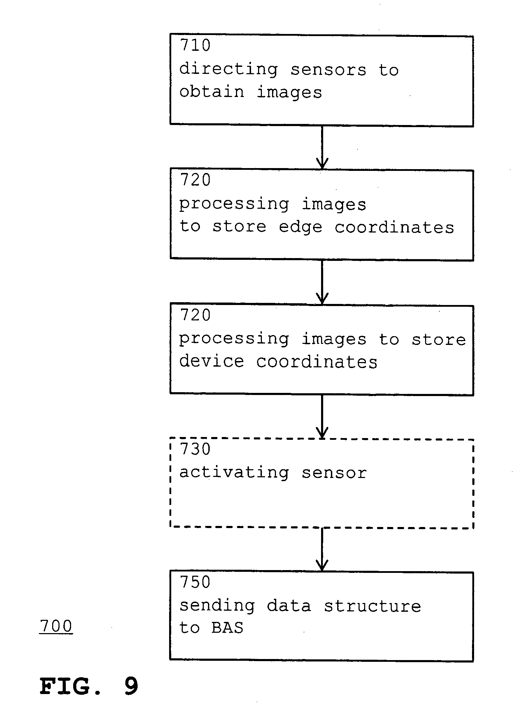

Processing blocks can be combined or related to each other to exchange (intermediate) data. This is illustrated by the arrow. However, there is no need to equip processor 880 will all possible combinations. The processing blocks in FIG. 2 can also stand for method steps, thus giving further details to the method (cf. FIG. 9).

The description explains how processor 880 obtains data structure 500 by processing images (1), how processor 880 increases the accuracy and adequacy of the device data (in structure 500) by also processing measurement values (2) and user data (3), and how processor 880 uses the device messages (4). In other words, accuracy and adequacy of the device data can be increased by adding processing blocks to the processor. For convenience of explanation, the description follows the arrow from a basic version of the processor (block (1)(a)) to a more comprehensive version.

Returning to FIG. 1 and looking at the input with more detail, optical sensor 810 (e.g., a camera) takes a plurality of images (410-①, 410-②) inside the room at different directions (e.g., direction ① illustrated). Sensor 820 is a collective term for that part of computer 800 that provides further raw data as non-image data.

Measurement values (2) are indicative of the position of the computer (inside the room), the movement of the computer, the distance of the computer to the walls, or indicative of other phenomena that relate to the computer, the room or to the device. In most cases, measurement values are given in physical measurement units, such as meters (m) or angular degrees (°), seconds (s), kilogram (kg), kelvin (K), ampere (A) etc. and combinations thereof (e.g. m/s for speed). The measurement values are not images. For example, sensor 820 measures the distance of device 251 to computer 800 to be one meter, or sensor 820 measures an angle of the sensor 810 to be in a particular direction (e.g. into y-direction, or 90° to the x-direction).

User data (3) represent information received from a user of computer 800. For example, sensor 820 can be part of a user interface to collect data such as confirmation or rejection instructions from the user, or data regarding the user (e.g., his/her body height). User data (3) may be retrieved from a user profile. Data that the user enters manually, for example, in modifying or editing measurement values (2) is user data (3) as well.

Device messages (4) represent information regarding particular devices in other forms, such as character strings. For example, sensor 820 communicates with device 251 via radio waves and forwards a network address of device 251 to processor 880.

Looking at the output with more detail, the details of processing are better understood by discussing data structure 500 first. The following overview explains how device data can be differentiated and classified (into **data classes**), how device data can be stored, and how BAS 600 uses the device data. Data structure 500 comprises elements. Examples for the data structure elements are given in the format XML (Extended Markup Language). The person of skill in the art can use other conventions, as long as data structure 500 can be processed by a BAS.
**(a) Location data** is data that represents the location of a particular device inside the building, and/or inside the rooms. Location data can be provided in coordinates. FIG. 1 uses a Cartesian coordinate system (X,Y,Z) that has its origin referred to room 215 and that uses meters.
   For example:
   <Room 215> Device 251 <location>(2,2,0)</location></Room 215>
   The BAS can use location data, for example, to perform consistency checks according to particular rules, so that the overall performance of the building automation is improved. For example, a lamp in the center of room 215 would perform better than a lamp at a corner of the room.
**(b) Assignment data** represents an assignment of particular devices to particular rooms, such the presence (or absence) of particular devices in particular rooms. Assignment data comprises a first data element that represents a particular device, a second data element that represents a particular room, and a data element indicating that a particular device as associated (or assigned) to a particular room. For example:
   <Room 215> Device 251 </Room 215>
   A device (such as device 251) that is assigned to a particular room (e.g., room 215, or floor) is a localized device. There can be functions in the BAS that are related to particular rooms, so that the BAS needs to take into account what devices are located in what rooms. In the above example with the ceiling lamp, both the lamp and the presence sensors are located in the same room.
**(c) Type data** is data that represents a type of a particular device. The type indicates a structure of the device, and/or a function of the device. For example, a device can be a lamp (structure) that provides light (function).
   For example:
   Device 251 <type>function="Lighting"</type>
   Functions and structure can be organized in hierarchies. For example, lighting devices not only comprise light actuators, light switches and lamps but also comprise devices that determine the need for light, such as light sensors, light meters, person presence sensors and so on. The hierarchy can be processed by the BAS. Type data can comprise data regarding a particular standard (e.g., by the KNX association) so that devices that comply with a particular standard have data elements that represent that compliance.
**(d) Identification data** is data that represents a particular device usually within a plurality of devices. Devices can have a particular identification (ID) number that can be physically related to the device optically (e.g., label with bar code, QR-code, or alphanumeric characters), electronically (e.g., a chip that is accessed by a radio link), or otherwise.
   For example:
   Device <ID>251</ID>
   Identification data can also comprise a network address of a network (cf. link 252) by that the BAS can control the device in the building.
**(e) Operational status data** is data that represents a particular state of a particular device within a set of possible states. Binary state sets can distinguish (i) normal function from malfunction (e.g., a lamp is ready of use, or the lamp is broken), (ii) active and passive states (e.g., the lamp provides light, the lamp is switched off), (iii) availability from non-availability (e.g., the lamp is still at its normal location, the lamp has been moved), (iv) state changes. Multi-value states can provide information such as (i) duration until maintenance, (ii) status of a battery (e.g., fully charged, partly discharged, or completely discharged) and the like.
**(f) Safety data** is data that relates to potential hazards (e.g., electrical shock, fire) that can be related to the devices.

Room data can be defined accordingly, and persons of skill in that art can provide a data structure that focuses on the room. The distinction between devices and rooms is rather arbitrary and there are transitions, some features of a room can be treated as a device. The criterion for being a device is related to the BAS:
(i) a device is a thing that is being controlled by the BAS,
(ii) or, a device is a thing that provides data that is processed by the BAS.

(i) For example, the heating is controlled by the BAS.
(ii) For example, a window is a structural element of the building, but a window can also be a device when data is used by the BAS. Much simplified, the operational status OPEN or CLOSED can be trigger the BAS to switch on or to switch off the heating in the room. Or, a wall can be painted white; and because it is white (type data) the BAS can control a projector (being a different device) that uses the wall as canvas.

Executing the method can provide data of the different classes substantially at the same time, or in a sequence of steps. Mobile computer 800 and/or BAS 600 can combine data from the data classes into derivatives. For example, the operational status DEFECT of a fire detector in combination with the assignment of the fire detector to a particular room can indicate a potential fire hazard (safety data).

There is no need to provide data in all classes. However, there is a dependency that is taken into account: Assignment data is usually derived from location data of the room and from location data of the device. A rule that relates to the presence of a device in a particular room can be established, for example, as follows. Using a 2-dimensional coordinate system (X,Y), the room is a plane (e.g., a rectangle) and devices having coordinates inside the plane are devices that are assigned to the room. The same principle applies for 3D-coordinates (X,Y,Z).

In that respect, location data (expressed by coordinates) can be considered as data that processor 880 uses as intermediate data. Higher coordinate accuracy leads to a more efficient and effective control of building 200 by BAS 600.

Looking at the processing with more detail, computer 800 processes the images (1) to obtain data structure 500. Processing starts by recognizing geometrical shapes on the images. The shapes reflect the wall or other parts of the room, and the devices. FIG. 1 illustrates the shapes simplified by a repetition of the black dot symbol. Recognition techniques are known in the art; there are optical recognition techniques available to detect shapes, symbols and/or images alphanumeric characters (optical character recognition OCR) in combination with positions on the image. For example, recognition techniques differentiate hues or check the saturation of an image, detect that an image structure matches a template, evaluate histograms of the images, or perform other methods.

Processing continues with the calculation of coordinates. Well-established techniques are available as well. For example, triangulation and trilateration has been available for centuries (e.g., for mapmaking, navigation), and electronic tools or computer-program libraries are available. Triangulation is described in text books. For example, a description is available in section 2.6.3 "Ebene Trigonometrie" by Bronstein/Semendjajew, Taschenbuch der Mathematik, Leipzig 1989.

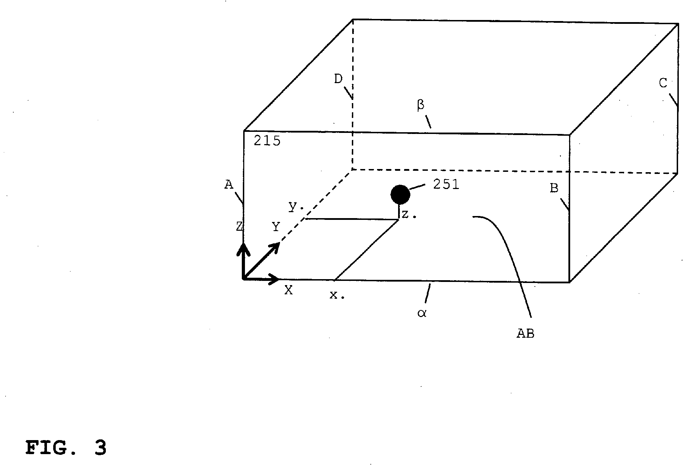

FIG. 3 illustrates coordinates and naming conventions in a perspective view of room 215 in building 200. The figure illustrates room 215 much simplified as a rectangular cuboid. The cuboid has 12 edges, but for simplicity of explanation only vertical edges A, B, C and D as well as horizontal edges α and β are identified. Room 215 has walls that can be identified by the vertical edges: wall AB, wall BC, wall CD and wall DA. The mathematical term "edge" corresponds to the more architectural term "corner".

The Cartesian coordinate system (X,Y,Z) is illustrated with the origin at the lower vertex of edge A. For example, coordinates of edge A can be defined as coordinates for the points (0, 0, 0) and (0, 0, Zmax) with Zmax being the height of room 215; and coordinates of wall AB can be defined by (0,0,0), (Xmax, 0, 0), (Xmax, 0, Zmax) and (Xmax, 0, Zmax). Coordinates of the edges and walls can be cross-calculated.

Device 251 is located inside room 215 at has coordinates (x1, y1, z1). In the following, the description focuses on 2-dimensional coordinates (X,Y) wherein the principles are applicable to 3-dimensional coordinates (X,Y,Z) as well.

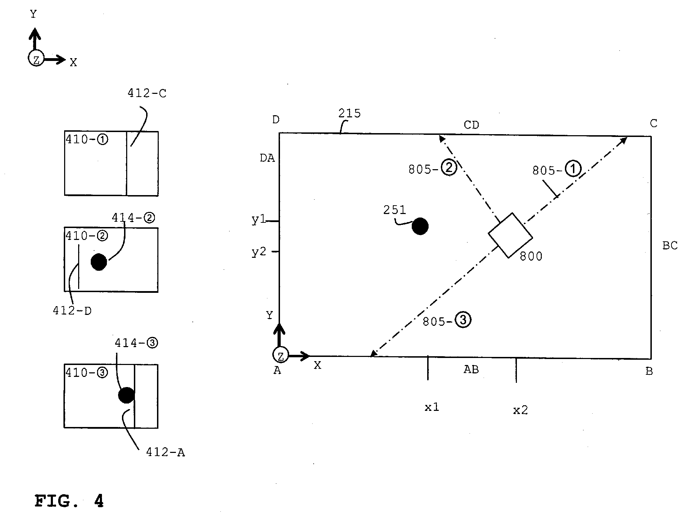

FIG. 4 illustrates a view-from-above of room 215 with mobile computer 800 as well as with images 410 taken by the optical sensor of mobile computer 800.

The optical sensor (cf. 810 in FIG. 1) of mobile computer 800 is directed to a plurality of directions 805-①, 805-②, 805-③ inside room 215. A plurality of images 410-①, 410-②, 410-③) is obtained with a particular image corresponding to a particular direction (or being associated with a particular direction). The figure illustrates this by computer 800 in direction ① (approximately towards edge C) and the corresponding image 410-①, in direction ② (approximately towards wall CD) and image 410-②, and direction ③ (approximately towards edge A, wall AB) and image 410-③.

For simplicity of illustration, it is assumed that the optical sensor has an angle of view (AOV, or field of view) of approximately 90°, with 45° left and 45° right to the direction 805. The exact value does not matter. For imaging the room in total, more images would be required with a narrow AOV camera; and fewer images would be required for a wide AOV camera.

For example, a user of the mobile computer 800 physically goes inside the room to a position approximately at the center of the room. The exact position does not matter. The user then takes a picture, moves the computer, then takes the next picture, moves the computer, and so on as if he or she would take a panoramic photo. The user can move mobile computer 800 by rotating it around a vertical axis (panning the camera, horizontal rotation), by moving it along a circle, or by horizontal transverse movement (tracking or traveling the camera).

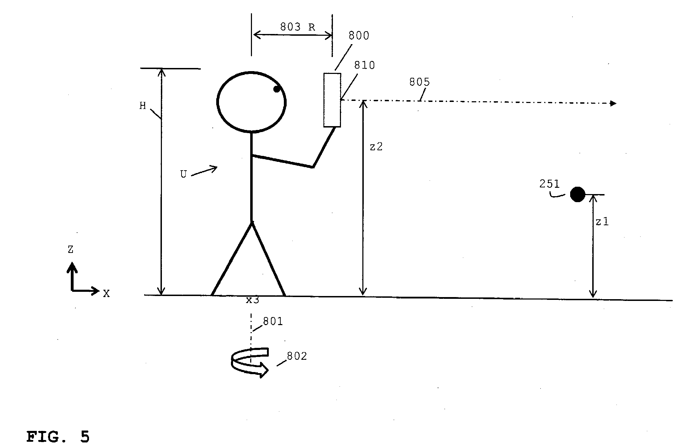

The description explains some aspects of the user and of the trajectory in connection with FIGS. 5-6.

The user can take one image after another, with overlap between images being allowed.

Mobile computer 800 stores the images at least temporarily. Mobile computer 800 can store the images in separate files (e.g., as pictures or photos), or can combine image sequences into a single file (e.g., as a video).

Computer 800 processes the plurality of images 410-①, 410-②, 410-③ to identify the edges of room 215 and stores edge coordinates in the data structure 500. As illustrated, the image can have image structures that represent the edges. Computer 800 uses image processing techniques to detect the presence (or absence) of the structures, and to determine the coordinates of the structures inside the images. Computer 800 then uses the triangulation or other techniques to calculate the coordinates of the edges (in the real world).

FIG. 4 illustrates image 410-① with a vertical line as image structure 412-C that represents edge C; image 410-② with a vertical line as image structure 412-D that represents edge D; and image 410-③ with a vertical line as image structure 412-A that represents edge A. The position of the lines inside the images corresponds to the AOV and to the size of the sensor. FIG. 4 illustrate the images in landscape format with the large edge placed horizontally and the short edge placed vertically, this format fits to the geometry of the room, but portrait format could also be used.

Mobile computer 800 can store the coordinates of the edges in data structure 500, or otherwise in an intermediate structure. Mobile computer can also generate a plan of the room (in view from above, with the edges, and potentially with lines connecting the edges, similar as shown in the figure).

As illustrated in images 410-② and 410-③, the device 251 was photographed, and there are image structures 414-② and 414-③ (for device 251). Mobile computer 800 then processes the plurality of images (again) and identifies (calculates) the device coordinates (x1, y1, z1) of room device 251. The coordinates can be stored in data structure 500 as well.

To improve accuracy, images can be calibrated, for example, by taking images of reference objects with known dimensions (e.g., levelling rods, room walls with known dimension).

The description continues by looking at the accuracy and adequacy of the device data and turn to details of using measurement values ((2) in the notation above) and user data (3). As mentioned above, such non-image raw data is provided by sensor 820 (cf. FIG. 1).

The accuracy in the determination of the coordinates (for the location data) can be increased by taking the mobility of the computer into account. As a consequence, the mobile computer with the camera has a position and a direction (also with coordinates); and the mobile computer is associated with a user that moves it and thereby changes position and direction.

FIG. 5 illustrates a side-view of user U who stands on the floor of the room (at coordinate (x3, y3, 0) and who holds mobile computer 800 in the hands. User U directs the camera (sensor 810 of computer 800) towards a wall (direction 805). Mobile computer 800 has a display and user U is watching the picture that is currently taken by the camera. Device 251 is illustrated to be within the AOV at (x1,...,z1).

Rotation axis 801 is the approximate axis for user U who can twist or turn around with the body. The user's rotation has rotation direction 802 (e.g. clockwise). Distance 803 from mobile computer 800 to rotation axis 801 is a movement radius R. If user U rotates approximately around axis 801, computer 800 moves along a trajectory that can be described as a circle with radius R that has its center at (x3, y3, z2).

The values of R and z2 are related to the body height H of user U. For example, for a user being 1.75 m tall and holding computer 800 as illustrated, z2 is estimated as 1,70 meters, and R is estimated as 0,40 meters. Processor 880 (cf. FIG. 1) can use the body height H to calculate z2 and R (or other dimensions), by using formulas and/or look-up tables. Since the user U is usually being identified as a person who inspected the building, the body height H belongs to personal data that is subject to data privacy laws. There is however no need to store H in permanent memory and no need to add H to the data structure. Some coordinates, such as z2, are measurement values (2) that processor 880 uses as intermediate values to calculate device data. For example, processor 880 can calculate the vertical location z1 of device 251. There is no need for accuracy within millimeter tolerances, but a rough estimation can be used to derive further device data. For example, location data (e.g., 0.9 m <= z1 <= 1.1 m) can be combined with other data (e.g., distance to door < 0.5 m) to a result that the device is a light switch (type data). Probabilities can be taken into account.

In other words, during image processing, a trigonometry calculation can take the height or tallness H of the user (holding the mobile computer 800) into account. In the alternative, the user could also move around in the room and change location, so that processor 880 takes the current position into account as well.

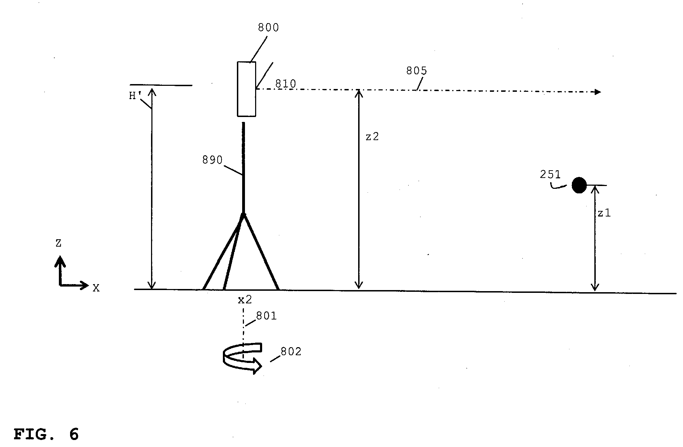

FIG. 6 illustrates a side-view of a tripod that stands on the floor of the room (at coordinate (x2, y2, 0)) and that holds mobile computer 800 (with sensor 810). Using a tripod is optional. The coordinates of FIG. 5 are applicable likewise (index 2 for the camera instead of index 3 for the user), with the exceptions that H' is the height of the tripod (the computer over floor) and that R = 0. Of course, z2 in FIGS. 5-6 can be different. It is noted that the user (not illustrated here) can move the computer, usually by turning it around the z-axis.

Processor 880 can use the measurement values (2) and/or user data (3) (cf. FIGS. 5-6) during processing. Accuracy and adequacy can further be improved by also processing further measurement values (2). As sensor 820, mobile computer 800 can have sensors such as gyroscopes, compass sensors, distance sensors, accelerometers, orientation sensors, rotation sensors etc.

Mobile computer 800 can calculate the coordinates (of the room edges and of the device) with higher accuracy if the camera position (of mobile computer 800) serves as a further input to the calculation. The camera position can be represented by coordinates (x2, y2, z2), by coordinates (x2, y2) as simplified in FIG. 4, or otherwise. The camera position could be approximated to the position of mobile computer 800 (the dimensions of the computer would be neglected).

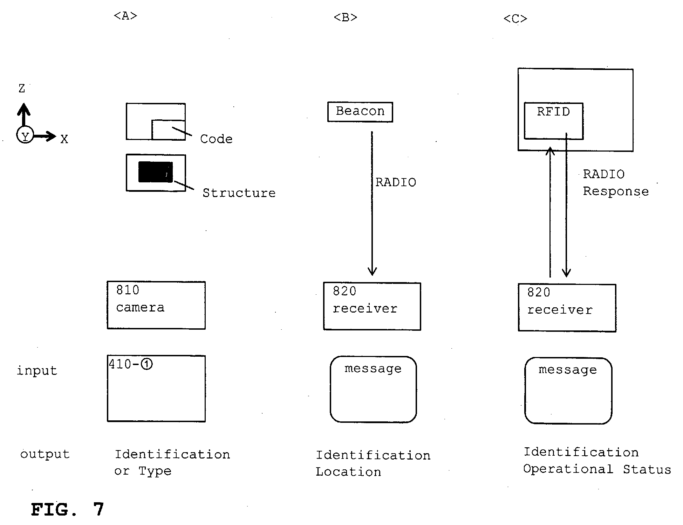

Mobile computer 800 can calculate the camera position can by triangulation or otherwise, as if mobile computer would be a device. Mobile computer 800 can calculate the coordinates with higher accuracy if the direction of the camera (cf. ①, ②, ③) serves as input to the calculation. There are several options to obtain the direction, such as calculating the direction from the images in combination with a further data input (e.g., manual input), reading a measurement value from a gyroscope sensor, or by combining image and gyroscope data. The person of skill in the art can explore other options, such as evaluating beacon signals from other devices, as explained in connection with FIG. 7 <B>.

Mobile computer 800 can calculate the coordinates with higher accuracy if the change of the direction of the camera is measured and serves as input to the calculation. In the scenario of FIG. 6, sensor 810 (i.e. the camera) pivots around the Z-axis and thereby changes the direction, but substantially remains at a position (x2, y2, z2). In the scenario of FIG. 6, sensor 810 moves along the circle trajectory, with the direction pivoting around (x3, Y3, 0). At the cost of accuracy, radius R can also be neglected.

The description continues with describing an approach to increase data adequacy at the output (of processor 880) by processing images (1), measurement values (2) and device messages (4) at the input.

FIG. 7 illustrates a simplified overview to device 251 and to sensors 810/820 in three scenarios <A>, <B> and <C>, with input data and output data by way of example. Device 251 is illustrated in front view (XZ-plane).

In scenario <A>, device 251 has a label with a visual code such as a barcode (or a quick response code, QR-code) that carries an identification number. Camera 810 provides image 410 (as described above), and processor 880 to read the code and to provide the identification as a character string. Referring to FIG. 2, this would be accomplished by a processing block at (1)(d). The label could also be an infrared tag, while sensor 810 or 820 would need to be responsive to infrared.

In a slightly modified scenario <A>, device 251 has an external appearance that is typical for its type (structure, function). For example, device 251 is a light switch that is a wall switch with an enclosure (in white color) and with a push button in the middle (black color). Camera 810 provides image 410, and processor 880 identifies the type (<type>switch</type>).

In scenario <B>, device 251 is a plurality of radio beacons that periodically send out signals. The location coordinates of the beacons are known (e.g., transmitted by the signal). Sensor 820 is a radio receiver. Processor 880 processes the signal and determines the location of computer 800 (cf. the accuracy discussion above) and - as a side product - the identification of the beacons. The persons of skill in the art can select the appropriate radio beacon. Such beacons are commercially available, for example, in implementation as Bluetooth Low Energy (BLE) modules (e.g., IBEACONS by Apple Inc.).

In scenario <C>, device 251 is a heating device. The device data of interest is the operational status (active? if yes at what temperature?). This is accomplished by a radio connection with a response function. Device 251 comprises a radio transmitter (e.g., an RFID tag), and sensor 820 comprises a transmitter with sender and with receiver. Scenario <C> may provide the advantage to collect data regarding devices that would not show up on an image. For example, the heating device may be hidden under a desk.

Other scenarios can be contemplated. Instead of devices having transmitters that send out radio signals (as in <B> or <C>), passive reflection can also be used. The device can have microwave radio signal reflectors (such as passive radio link deflectors) or passive RFIDs. In this case, mobile computer 800 comprises a radio signal emitter and a corresponding receiver. The emitters/receiver can be an integral part or can be connected to computer 800 externally. They are commercially available, for example, in RFID scanners for scan retail articles.

Occasionally, data processing would identify something as a device that actually is not a device. For example, image processing (cf. processing block (1)(a) in FIG. 2) would identify a "device" on an image taken in direction ②, but not in ③. This would be inconsistent, but accuracy and adequacy checks (e.g., querying for an ID) would reveal the non-device character (e.g., animal). For example, a spider would probably move while the user takes pictures.

As mentioned above, the description has referred to mobile computer 800 that has sensors 810 and 820 statically mounted. Using a mobile computer with sensors that can move relative to the body of the computer would also be possible. In such as case, the movement of the sensor (e.g., the camera) has to be taken into account.

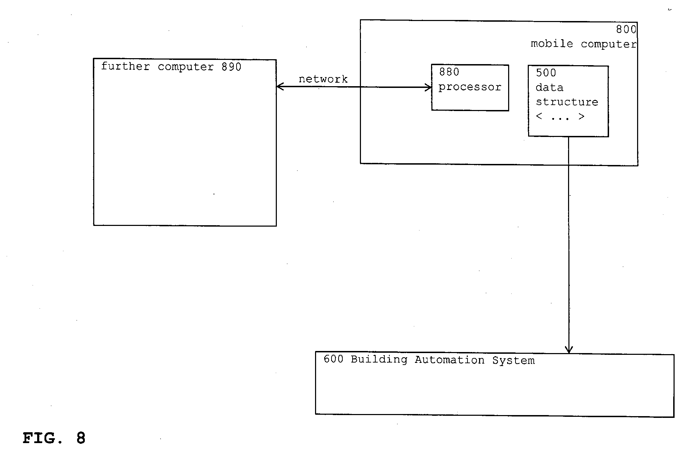

FIG. 8 illustrates mobile computer 800 in combination with further computer 890 that is connected via a network. Some of the processing blocks (cf. FIG. 2) of processor 880 may require the use of computation resources (e.g., in terms of memory or processing speed), calculation resources (e.g., to deal with a complexity of image data, especially for 3D processing), library resources (e.g., recognition software, conventions for the data structure, databases with devices), image recognition resources (e.g., for devices that are not frequently used), search resources (e.g., to automatically search for pictures that are similar to the images, searching in the Internet), and so on. Some of the resources can be provided by further computer 890. Computer 890 can provide the resources, for example, as Software as a Service (SaaS). Further computer 890 can be part of a backend system, and the use of further computer is well known under the term "cloud computing".

FIG. 9 is a method flow chart of computer-implemented method 700 for providing a data structure that is suitable for building automation system 600 for building 200. As explained above in connection with FIG. 1, the building has at least one room 215 with at least one room device 251.

In step directing 710, optical sensor 810 of mobile computer 800 is directed to a plurality of directions ①,②,③ inside room 215. Sensor 810 thereby obtains a plurality of images 410-①, 410-②, 410-③. A particular image corresponds to a particular direction.

In step processing 720, the plurality of images 410-①, 410-②, 410-③ is processed so that edges A, B, C, D of room 215 are identified. Edge coordinates XYA, XYB, XYC, XYD are stored in data structure 500.

In step processing 730, the plurality of images 410-①, 410-②, 410-③ is processed to identify device coordinates (x1,y1,z1) of room device 251. Device coordinates (x1,y1,z1) are stored in data structure 500.

Processing 720 the plurality of images to identify edges of the room can comprise to detect the presence of an image structure 412-B, 412-C, 412-D that represents the edges. Processing 730 the plurality of images to identify device coordinates can comprise to detect the presence of an image structure 414-②, 414-③ that represents the device.

In step sending 750, the mobile device sends data structure 500 to BAS 600. BAS 600 is then ready to control the device(s) in the building.

In an optional step activating 740 (dashed box, prior to 750), the mobile computer activates sensor 820 that is attached to the mobile computer. Sensor 820 implements a function that is selected from the following: to measure at least one distance of the mobile computer to at least one wall, to receive a radio signal from the at least one device (cf. FIG. 7 <B> <C>), to identify a type of the room device (the type indicating a structure and/or a function of the room device), to obtain identification data that represents a particular room device within a plurality of devices, to obtain operational status data that represents a particular state of a particular device within a set of possible states, and to obtain safety data that relates to potential hazards in relation to the room device.

Method 700 can be performed with the images being obtained while mobile computer 800 is being moved (cf. FIG. 5-6), for example by rotating around vertical axis Z. Processing steps 720 and 730 can use techniques such as: recognizing hue saturation; detection that the image structure matches templates; evaluating a histogram of the image; and identifying visual codes. Processing steps 720 and 730 can be performed by processor 880 of mobile computer 800 (cf. FIG. 1), or at least partly performed by a processors of further computer 890 that communicates with the mobile computer (cf. FIG. 8). During image processing, the computer can perform trigonometry calculations that take the height or tallness of the user holding the mobile computer 800 into account.

FIG. 9 also illustrates a computer program or a computer program product. The computer program product - when loaded into a memory of a computer and being executed by at least one processor of the computer - performs the steps of the computer-implemented method. So in other words, the blocks in FIG. 9 illustrate that the method can be implemented by a computer (e.g., computer 800) under the control of the program. The same principle applies to the processing blocks that are explained in connection with FIG. 2.

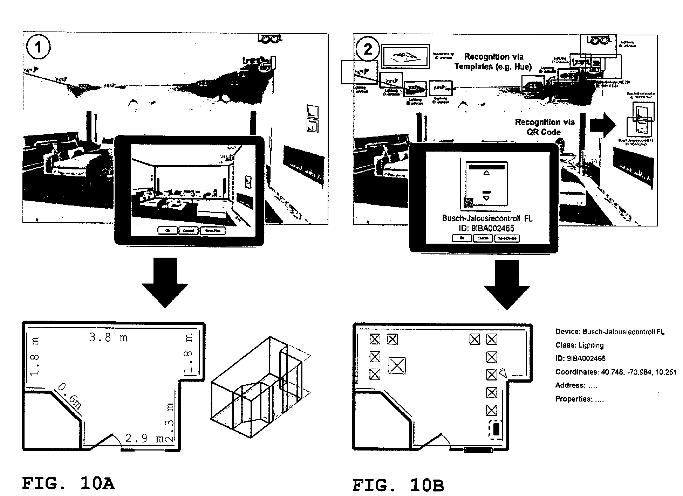

FIGS. 10A and 10B illustrate diagrams of rooms, devices, and mobile computers in combination with floor plans and data structures, by way of example. The upper half of the figures shows a photograph of a room that has walls and devices, and shows a mobile computer, for example, a so-called "smart phone". The user of the computer - the integrator - is not illustrated but it can be understood that the user looks at a rear display of the computer. The lower half of the figures shows floor plans (in the XY-plane) that are associated with the data structure.

As in FIG. 10A, the computer display shows an image being taken from the room, and the floor plan shows data that is obtained by image processing, such as wall coordinates (given here by distances and length in meters). As in FIG. 10B, the computer display shows a particular device: a jalousie controller, with a QR-code (example for a visual code, cf. FIG. 7 <A>), and the floor plan shows details for further devices.

In view of the above-explained classification of device data, FIGS. 10A and 10B give examples for the following: (a) Location data, e.g., the coordinates of the devices and of the walls; (b) Assignment data, e.g., devices belonging to the room, but not to a different room; (c) Type data, e.g., the identification of a type "Busch-Jalousiecontroll FL" and a class "Lighting"; and (d) Identification data, e.g. the ID given for the particular controller. The figures also give an example for the image processing, in the example, devices are recognized by templates and hue saturation.

The description continues with describing some further implementation aspects.

Mobile computer 800 can be a commodity device that is equipped, for example, with a camera (i.e., sensor 810), a unit to identify its geographic position (Global Positioning System GPS), a gyroscope to identify movement, direction etc. The user interface can be a touchscreen. Such mobile computers are known as "Smart Phones".

Some of these commercially available computers can be equipped with further units, or sensors 820. For example, Google Inc. offers the project "Tango" that includes software (i.e., a development kit) and a computer with a motion tracking camera, a 3D depth sensing unit, an accelerometer, an ambient light sensor, a barometer, a compass, a GPS unit, and a gyroscope. The sensors provide for more precise and advanced recognition and positioning. Computers with such further sensors seem to be more suitable for rooms that are larger than traditional offices rooms.

Sensor 810 (camera) can be stereoscopic camera.

The method can be repeated. The user can place mobile computer 800 into a center position of the room, run the method to obtain preliminary data, and can place mobile computer 800 to other locations to fine-tune the data. The exact position of the computer is being tracked. According to the output data, there can be two or more operation modes. For example, in a first mode, mobile computer 800 provides location data to identify the dimensions (coordinates) of the room (cf. FIG. 3), in a second mode, mobile computer 800 provides device data. Looking at FIG. 2, the processing blocks can be activated at different points in time. The user lets the computer perform pre-conditioning (first mode, room data only), and lets the computer perform detailed analysis (second or other mode) later.

As mentioned above, the data collected by mobile computer 800 can be used to provide a plan of the building. There are building plans, floor plans, room plans, or the like. As sensors 810 and 820 and processor 880 uses coordinates in 3 dimensions (X, Y, Z), the plans can be provided as 2D or 3D-plans.

User interaction is optional and comprises presenting plans, data structure, image and the like to the user (e.g. on the screen of the computer). The user can confirm or reject data, or can modify data manually. The user can also combine several devices (of the same type) to groups.

Data structure 500 and link 252 can be adapted to standard BAS. For example, device identification can use addresses according to a communications protocol for intelligent buildings. Standards are applicable, such as EN 50090 (Home and Building Electronic Systems HBES, with various parts), that has taken over documents from the KNX Association.

Grouping devices can be performed automatically and can include the assignment of a particular control function to devices that are in a group. During operation of BAS 600, for example, a first device (a person presence sensor) sends a KMX-compliant data telegram to BAS 600. BAS 600 looks up in data structure 500 and identifies a group of lighting devices and sends a signal to a group address. Hence, the lamps of the particular group are switched on (or off, as the case may be).

Computer 800 can use pre-defined rule to check the consistency of the data structure. This approach avoids inappropriate control signals from the BAS to the building so that overall system becomes more robust to variations. For example, computer 800 can recognize a device of a given device type or category is wrongly installed. To stay with the above-mentioned light switch, for a device classified as a light switch but having a larger device-to-door distance (e.g, > 0.5 m), applying the rule would potentially lead to a preliminary conclusion that the device is not a light switch. Also, computer 800 can recognize that a device is missing. The rule would, for example, check for the existence of a switch for room types for that lighting is mandatory.

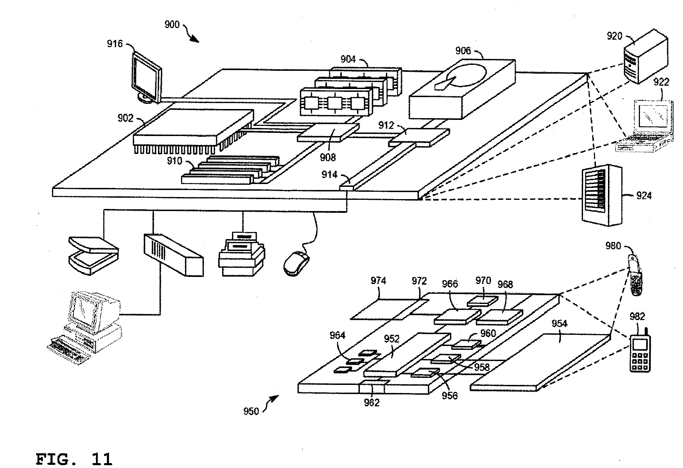

FIG. 11 is a diagram that shows an example of a generic computer device 900 and a generic mobile computer device 950, which may be used with the techniques described here. Computing device 900 is intended to represent various forms of digital computers, such as laptops, desktops, workstations, personal digital assistants, servers, blade servers, mainframes, and other appropriate computers. Generic (mobile) computer device may 900/950 correspond to mobile computer 800 or BAS 600 of FIG. 1. Computing device 950 is intended to represent various forms of mobile devices, such as personal digital assistants, cellular telephones, smart phones, and other similar computing devices. For example, computing device 950 may include the data storage components and/or processing components of agent devices as shown in FIG. 1. The components shown here, their connections and relationships, and their functions, are meant to be exemplary only, and are not meant to limit implementations of the inventions described and/or claimed in this document.

Computing device 900 includes a processor 902, memory 904, a storage device 906, a high-speed interface 908 connecting to memory 904 and high-speed expansion ports 910, and a low speed interface 912 connecting to low speed bus 914 and storage device 906. Each of the components 902, 904, 906, 908, 910, and 912, are interconnected using various busses, and may be mounted on a common motherboard or in other manners as appropriate. The processor 902 can process instructions for execution within the computing device 900, including instructions stored in the memory 904 or on the storage device 906 to display graphical information for a GUI on an external input/output device, such as display 916 coupled to high speed interface 908. In other implementations, multiple processors and/or multiple buses may be used, as appropriate, along with multiple memories and types of memory. Also, multiple computing devices 900 may be connected, with each device providing portions of the necessary operations (e.g., as a server bank, a group of blade servers, or a multi-processor system).

The memory 904 stores information within the computing device 900. In one implementation, the memory 904 is a volatile memory unit or units. In another implementation, the memory 904 is a non-volatile memory unit or units. The memory 904 may also be another form of computer-readable medium, such as a magnetic or optical disk.

The storage device 906 is capable of providing mass storage for the computing device 900. In one implementation, the storage device 906 may be or contain a computer-readable medium, such as a floppy disk device, a hard disk device, an optical disk device, or a tape device, a flash memory or other similar solid state memory device, or an array of devices, including devices in a storage area network or other configurations. A computer program product can be tangibly embodied in an information carrier. The computer program product may also contain instructions that, when executed, perform one or more methods, such as those described above. The information carrier is a computer- or machine-readable medium, such as the memory 904, the storage device 906, or memory on processor 902.

The high speed controller 908 manages bandwidth-intensive operations for the computing device 900, while the low speed controller 912 manages lower bandwidth-intensive operations. Such allocation of functions is exemplary only. In one implementation, the high-speed controller 908 is coupled to memory 904, display 916 (e.g., through a graphics processor or accelerator), and to high-speed expansion ports 910, which may accept various expansion cards (not shown). In the implementation, low-speed controller 912 is coupled to storage device 906 and low-speed expansion port 914. The low-speed expansion port, which may include various communication ports (e.g., USB, Bluetooth, Ethernet, wireless Ethernet) may be coupled to one or more input/output devices, such as a keyboard, a pointing device, a scanner, or a networking device such as a switch or router, e.g., through a network adapter.

The computing device 900 may be implemented in a number of different forms, as shown in the figure. For example, it may be implemented as a standard server 920, or multiple times in a group of such servers. It may also be implemented as part of a rack server system 924. In addition, it may be implemented in a personal computer such as a laptop computer 922. Alternatively, components from computing device 900 may be combined with other components in a mobile device (not shown), such as device 950. Each of such devices may contain one or more of computing device 900, 950, and an entire system may be made up of multiple computing devices 900, 950 communicating with each other.

Computing device 950 includes a processor 952, memory 964, an input/output device such as a display 954, a communication interface 966, and a transceiver 968, among other components. The device 950 may also be provided with a storage device, such as a microdrive or other device, to provide additional storage. Each of the components 950, 952, 964, 954, 966, and 968, are interconnected using various buses, and several of the components may be mounted on a common motherboard or in other manners as appropriate.

The processor 952 can execute instructions within the computing device 950, including instructions stored in the memory 964. The processor may be implemented as a chipset of chips that include separate and multiple analog and digital processors. The processor may provide, for example, for coordination of the other components of the device 950, such as control of user interfaces, applications run by device 950, and wireless communication by device 950.

Processor 952 may communicate with a user through control interface 958 and display interface 956 coupled to a display 954. The display 954 may be, for example, a TFT LCD (Thin-Film-Transistor Liquid Crystal Display) or an OLED (Organic Light Emitting Diode) display, or other appropriate display technology. The display interface 956 may comprise appropriate circuitry for driving the display 954 to present graphical and other information to a user. The control interface 958 may receive commands from a user and convert them for submission to the processor 952. In addition, an external interface 962 may be provide in communication with processor 952, so as to enable near area communication of device 950 with other devices. External interface 962 may provide, for example, for wired communication in some implementations, or for wireless communication in other implementations, and multiple interfaces may also be used.

The memory 964 stores information within the computing device 950. The memory 964 can be implemented as one or more of a computer-readable medium or media, a volatile memory unit or units, or a non-volatile memory unit or units. Expansion memory 984 may also be provided and connected to device 950 through expansion interface 982, which may include, for example, a SIMM (Single In Line Memory Module) card interface. Such expansion memory 984 may provide extra storage space for device 950, or may also store applications or other information for device 950. Specifically, expansion memory 984 may include instructions to carry out or supplement the processes described above, and may include secure information also. Thus, for example, expansion memory 984 may act as a security module for device 950, and may be programmed with instructions that permit secure use of device 950. In addition, secure applications may be provided via the SIMM cards, along with additional information, such as placing the identifying information on the SIMM card in a non-hackable manner.

The memory may include, for example, flash memory and/or NVRAM memory, as discussed below. In one implementation, a computer program product is tangibly embodied in an information carrier. The computer program product contains instructions that, when executed, perform one or more methods, such as those described above. The information carrier is a computer- or machine-readable medium, such as the memory 964, expansion memory 984, or memory on processor 952, that may be received, for example, over transceiver 968 or external interface 962.

Device 950 may communicate wirelessly through communication interface 966, which may include digital signal processing circuitry where necessary. Communication interface 966 may provide for communications under various modes or protocols, such as GSM voice calls, SMS, EMS, or MMS messaging, CDMA, TDMA, PDC, WCDMA, CDMA2000, or GPRS, among others. Such communication may occur, for example, through radio-frequency transceiver 968. In addition, short-range communication may occur, such as using a Bluetooth, WiFi, or other such transceiver (not shown). In addition, GPS (Global Positioning System) receiver module 980 may provide additional navigation- and location-related wireless data to device 950, which may be used as appropriate by applications running on device 950.

Device 950 may also communicate audibly using audio codec 960, which may receive spoken information from a user and convert it to usable digital information. Audio codec 960 may likewise generate audible sound for a user, such as through a speaker, e.g., in a handset of device 950. Such sound may include sound from voice telephone calls, may include recorded sound (e.g., voice messages, music files, etc.) and may also include sound generated by applications operating on device 950.

The computing device 950 may be implemented in a number of different forms, as shown in the figure. For example, it may be implemented as a cellular telephone 980. It may also be implemented as part of a smart phone 982, personal digital assistant, or other similar mobile device.

Various implementations of the systems and techniques described here can be realized in digital electronic circuitry, integrated circuitry, specially designed ASICs (application specific integrated circuits), computer hardware, firmware, software, and/or combinations thereof. These various implementations can include implementation in one or more computer programs that are executable and/or interpretable on a programmable system including at least one programmable processor, which may be special or general purpose, coupled to receive data and instructions from, and to transmit data and instructions to, a storage system, at least one input device, and at least one output device.

These computer programs (also known as programs, software, software applications or code) include machine instructions for a programmable processor, and can be implemented in a high-level procedural and/or object-oriented programming language, and/or in assembly/machine language. As used herein, the terms "machine-readable medium" and "computer-readable medium" refer to any computer program product, apparatus and/or device (e.g., magnetic discs, optical disks, memory, Programmable Logic Devices (PLDs)) used to provide machine instructions and/or data to a programmable processor, including a machine-readable medium that receives machine instructions as a machine-readable signal. The term "machine-readable signal" refers to any signal used to provide machine instructions and/or data to a programmable processor.

To provide for interaction with a user, the systems and techniques described here can be implemented on a computer having a display device (e.g., a CRT (cathode ray tube) or LCD (liquid crystal display) monitor) for displaying information to the user and a keyboard and a pointing device (e.g., a mouse or a trackball) by which the user can provide input to the computer. Other kinds of devices can be used to provide for interaction with a user as well; for example, feedback provided to the user can be any form of sensory feedback (e.g., visual feedback, auditory feedback, or tactile feedback); and input from the user can be received in any form, including acoustic, speech, or tactile input.

The systems and techniques described here can be implemented in a computing device that includes a back end component (e.g., as a data server), or that includes a middleware component (e.g., an application server), or that includes a front end component (e.g., a client computer having a graphical user interface or a Web browser through which a user can interact with an implementation of the systems and techniques described here), or any combination of such back end, middleware, or front end components. The components of the system can be interconnected by any form or medium of digital data communication (e.g., a communication network). Examples of communication networks include a local area network ("LAN"), a wide area network ("WAN"), and the Internet.

The computing device can include clients and servers. A client and server are generally remote from each other and typically interact through a communication network. The relationship of client and server arises by virtue of computer programs running on the respective computers and having a client-server relationship to each other.

A number of embodiments have been described. Nevertheless, it will be understood that various modifications may be made without departing from the spirit and scope of the invention.

In addition, the logic flows depicted in the figures do not require the particular order shown, or sequential order, to achieve desirable results. In addition, other steps may be provided, or steps may be eliminated, from the described flows, and other components may be added to, or removed from, the described systems. Accordingly, other embodiments are within the scope of the following claims.

## Claims

1. A method (700) of providing a data structure (500), wherein the data structure (500) is suitable for use by a building automation system (600) for a building (200) having at least one room (215) with at least one room device (251), the method (700) comprising the following steps:
directing (710) an optical sensor (810) of a mobile computer (800) to a plurality of directions (①,②,③) inside the room (215), thereby obtaining a plurality of images (410-①, 410-②, 410-③), with a particular image corresponding to a particular direction;
processing (720) the plurality of images (410-①, 410-②, 410-③) to identify edges (A, B, C, D) of the room (215) and storing edge coordinates (XYA, XYB, XYC, XYD) in the data structure (500);
processing (730) the plurality of images (410-①, 410-②, 410-③) to identify device coordinates (x1,y1,z1) of the at least one room device (251), and storing the device coordinates (x1,y1,z1) in the data structure (500); and
sending (750) the data structure (500) to the building automation system (600).

2. The method (700) for providing a data structure (500) according to claim 1, wherein processing (720) the plurality of images (410-①, 410-②, 410-③) to identify edges (A, B, C, D) of the room (215) comprises to detect the presence of an image structure (412-B, 412-C, 412-D) that represents the edges (B, C, D).

3. The method (700) for providing a data structure (500) according to any of the preceding claims, wherein processing (730) the plurality of images (410-①, 410-②, 410-③, 410-4) to identify device coordinates comprises to detect the presence of an image structure (414-②, 414-③) that represents the device (251).

4. The method (700) for providing a data structure (500) according to any of the preceding claims, further comprising: activating (740) a sensor (820) that is attached to the mobile computer (800), with the sensor implementing a function that is selected from the following:
to measure at least one distance (d) of the mobile computer (800) to at least one wall;
to receive a radio signal from the at least one device;
to identify a type of the room device (251), the type indicating a structure and/or a function of the room device (251);
to obtain identification data that represents a particular room device (251) within a plurality of devices; to obtain operational status data that represents a particular state of a particular device within a set of possible states; and
to obtain safety data that relates to potential hazards in relation to the room device (251).

5. The method (700) for providing a data structure (500) according to any of the preceding claims, with the images being obtained while the mobile computer (800) is being moved.

6. The method (700) according to claim 6, wherein the mobile computer (800) is being moved by rotating around a vertical axis (Z).

7. The method (700) for providing a data structure (500) according to any of the preceding claims, wherein the steps processing (720, 730) the plurality of images comprise techniques selected from the following: recognizing hue saturation; detecting that the image structure matches templates; evaluating a histogram of the image; and identifying visual codes.

8. The method (700) according to any of the preceding claims, wherein the steps processing (720, 730) the plurality of images is performed by a processor (880) of the mobile computer (800), or at least partly performed by a processors of a further computer that communicates with the mobile computer (800).

9. The method (700) according to any of the preceding claims, wherein processing (720, 730) the plurality of images can comprise trigonometry calculation that takes the height or tallness (H) of a user (U) holding the mobile computer (800) into account.

10. A computer program product - when loaded into a memory of a computer and being executed by at least one processor of the computer - performs the steps of the computer-implemented method according to any of claims 1-9.

11. A system (800) being implemented as a mobile computer, the system (800) adapted to provide a data structure (500) that is suitable for use by a building automation system (600) for a building (200) having at least one room (215) with at least one room device (251), the system comprising:
an optical sensor (810) that is adapted to be directed (710) to a plurality of directions inside the room (215), and to obtain a plurality of images, with a particular image associated with a particular direction;
a processor (880) that is adapted to process (720) the plurality of images to identify edges of the room (215) and to store edge coordinates in the data structure (500) and
that is further adapted to process (730) the plurality of images to identify device coordinates of at least one room device (251), to store the device coordinates in the data structure (500), and to send (750) the data structure to the building automation system.

12. The system (800) according to claim 11, wherein the processor is adapted to process the plurality of images by using techniques that are selected from the following:
recognizing hue saturation; detection that the image structure matches templates; and evaluating a histogram of the images.

13. The system (800) according to any of claims 11-12, further comprising an attached sensor (820) that is selected from the following:
a distance sensor to measure at least one distance (d) of the mobile computer (800) to at least one wall;
a radio signal receiver to receive a signal from the room device;
a position sensor to identify the position of the mobile computer inside the room; and
a direction sensor to determine the direction of the mobile computer inside the room.

14. The system (800) according to claim 13, wherein data obtained from the attached sensor is used to the increase the accuracy of the coordinates in the data structure and to provide further data that is specific to the at least one room device.

15. A building automation system (600) adapted to control at least one room device (251) in a room (215) of a building (200), in correspondence to the data of a data structure (500) that the building automation system (600) receives from a system (800) according to any of claims 11-14.
